# EUROPÄISCHE PATENTANMELDUNG

(11) **EP 3 275 576 A1**
(43) Veröffentlichungstag der Anmeldung: **31.01.2018**
(21) Anmeldenummer: 16181495.9
(22) Anmeldetag: 27.07.2016
(51) Int. Cl.: B22F 3/105, B23K 26/342, B23K 26/12, B23K 13/01, B23K 13/04, B23K 35/28, B23K 35/30, B23K 35/32

(54) **VERFAHREN ZUM VERBINDEN VON METALLISCHEN BAUTEILEN**

(71) Anmelder: Airbus Defence and Space GmbH, 82024 Taufkirchen (DE)
(72) Erfinder: GREITEMEIER, Daniel, 85241 Hebertshausen-Ampermoching (DE); PALM, Frank, 82008 Unterhaching (DE)
(74) Vertreter: Isarpatent

(57) **Zusammenfassung**

Die vorliegende Erfindung schafft ein Verfahren zum Verbinden von metallischen Bauteilen, welche gleiche oder verschiedene Metalllegierung umfassen, wobei hierbei die Metalllegierungen in einen thixotropen Zustand überführt werden und unter Vakuum verbunden werden, sowie eine Anordnung, welche durch das erfindungsgemäße Verfahren hergestellt wird.

## Beschreibung

Die vorliegende Erfindung schafft ein Verfahren zum Verbinden von metallischen Bauteilen, welche gleiche oder verschiedene Metalllegierung umfassen, wobei hierbei die Metalllegierungen in einen thixotropen Zustand überführt und unter Vakuum verbunden werden, sowie eine Anordnung, welche durch das erfindungsgemäße Verfahren hergestellt wird.

Das lagenförmige Verbinden von metallischen Drähten oder Filamenten zu form- und stoffschlüssigen 3D-Körpern ist bis heute nicht erfolgreich umgesetzt, da es nicht gelingt, die übereinander geschichteten Metall-Materiallagen reproduzierbar miteinander zu verbinden. Bei Kunststoff-Formteilen wie Kunststoffdrähten wird dies beispielsweise mittels Fused-Deposition Modelling (FDM) erfolgreich durchgeführt und kommerziell angewendet, Versuche bei metallischen Werkstoffen blieben bisher allerdings erfolglos, da die Grenz- bzw. Kontaktfläche, üblicherweise eine oxidbelegte Oberfläche, einer erforderlichen stoffschlüssigen Verbindung entgegensteht.

Es ist eine Aufgabe der vorliegenden Erfindung, ein verbessertes Verfahren bereitzustellen, mittels welchem metallische Bauteile ohne Hilfsstoffe stoffschlüssig verbunden werden können.

Diese Aufgabe wird gelöst durch ein Verfahren, bei dem die Bauteile mit Metalllegierungen im thixotropen Zustand unter Vakuum verbunden werden. Durch das erfindungsgemäße Verfahren kann eine erforderliche stoffschlüssige Verbindung zwischen abgelegten Metallbereichen bzw. Metalllagen in Bauteilen erreicht werden, wobei hierbei einerseits ein Schutz des Bauteils vor übermäßiger Oxidation erzielt wird und andererseits durch den Unterdruck eine Aktivierung der Bauteile in einen bindungsfähigen Zustand erfolgt.

Gemäß einem ersten Aspekt betrifft die vorliegende Erfindung ein Verfahren zum Verbinden von zumindest einem ersten und einem zweiten metallischen Bauteil, wobei das erste metallische Bauteil mindestens eine Metalllegierung umfasst, umfassend die folgenden Schritte:
Erwärmen des zumindest ersten metallischen Bauteils auf eine Temperatur, bei der zumindest eine Metalllegierung des ersten Bauteils einen thixotropen Zustand aufweist;
Einbringen der metallischen Bauteile in ein Vakuum; und
Inkontaktbringen der metallischen Bauteile.

Zudem betrifft die vorliegende Erfindung in einem weiteren Aspekt eine Anordnung, welche durch das erfindungsgemäße Verfahren hergestellt wird.

Weitere Ausgestaltungen und Weiterbildungen können den abhängigen Ansprüchen bzw. der nachfolgenden Beschreibung sowie den beiliegenden Figuren entnommen werden.

Im Rahmen der Erfindung haben, soweit nicht anderweitig definiert oder aus dem Kontext ersichtlich, technische und wissenschaftliche Begriffe dieselbe Bedeutung, welche ihnen üblicherweise von einem Fachmann auf dem Gebiet der Erfindung zugesprochen wird.

Als thixotroper Zustand bzw. thixotroper Werkstoffzustand ist hierbei der thermische Bereich einer Metalllegierung zu verstehen, in dem sich diese zwischen der Solidus- und Liquidus-Temperatur befindet. Die Thixotropie bezeichnet hierin eine Zeitabhängigkeit der Fließeigenschaften bei nichtnewtonschen Fluiden, bei der die Viskosität infolge andauernder mechanischer Beanspruchung abnimmt und erst nach beendigter Beanspruchung wieder zunimmt. Vorliegend wird dieser thixotrope Zustand für die Metalllegierungen der metallischen Bauteile erreicht, es werden also die Bauteile auf eine Temperatur erwärmt, die in einem Bereich liegt, in der die im Bauteil vorhandene Legierung einen thixotropen Zustand aufweist, also einen Zustand, der zwischen einem festen und flüssigen Zustand liegt. Es findet also eine Art teilweises Schmelzen statt.

Gemäß bestimmten Ausführungsformen besteht das zumindest erste metallische Bauteil, gemäß bestimmten Ausführungsformen auch das zweite und/oder weitere metallische Bauteile, aus der jeweiligen Metalllegierung bzw. Legierung, wobei die Legierung zumindest des ersten metallischen Bauteils gemäß bestimmten Ausführungsformen nicht als Eutektikum vorliegt, da bei einem Eutektikum üblicherweise eine Erstarrung ohne thixotropen Zustand erfolgt. Es ist aber nicht ausgeschlossen, dass das zweite Bauteil als Metall oder Eutektikum vorliegt oder ein Metall und/oder Eutektikum umfasst, insofern es als metallisches Bauteil vorliegt, also metallische Bestandteile (Metall oder Legierung) aufweist, um eine metallische Verbindung zu erzeugen. Gemäß bestimmten Ausführungsformen umfasst das zweite Bauteil mindestens eine Metalllegierung oder besteht aus mindestens einer Metalllegierung. Es ist erfindungsgemäß nicht ausgeschlossen, dass das erste Bauteil und das zweite Bauteil von gleichem Aussehen und gleicher Beschaffenheit sind, also beispielsweise 2 identische Bauteile sind, jedoch sind das erste und zweite Bauteil gemäß bestimmten Ausführungsformen verschieden. Es ist erfindungsgemäß nicht ausgeschlossen, dass die Bauteile verschiedene Metalllegierungen umfassen oder aus verschiedenen Metalllegierungen bestehen, oder das nur das erste metallische Bauteil. So kann beispielsweise das erste Bauteil aus einer anderen Legierung bestehen als das zweite Bauteil. Auch können die Bauteile selbst verschiedene Legierungen umfassen, beispielsweise in einem geschichteten oder einem vermischten oder abschnittsweisen Aufbau. Gemäß bestimmten Ausführungsformen bestehen die Bauteile aus derselben Metalllegierung oder umfassen dieselbe Metalllegierung. Gemäß bestimmten Ausführungsformen bestehen die Bauteile aus verschiedenen Metalllegierungen oder umfassen verschiedene Metalllegierungen. Es ist erfindungsgemäß nicht ausgeschlossen, dass die Bauteile auch Bereiche umfassen, die nicht aus der jeweiligen Metalllegierung bestehen, die also auch nicht aus einer Legierung bestehen, insofern sichergestellt wird, dass zu verbindende Bereiche des zumindest ersten Bauteils und bevorzugt auch des zweiten Bauteils und weiterer Bauteile Metalllegierungen umfassen. Daneben kann ein Bauteil aber auch Bereiche umfassen, welche aus Metall, Keramik, etc. bestehen. Auch ist es erfindungsgemäß nicht ausgeschlossen, dass ein Bauteil mehrere verschiedene Metalllegierungen aufweist, welche mit einer oder mehreren - gleichen oder verschiedenen - Metalllegierungen von einem oder mehreren Bauteilen verbunden werden.

Durch das Bringen in einen thixotropen Zustand können die metallischen Bauteile, beispielsweise auch nur das erste metallische Bauteil, gemäß bestimmten Ausführungsformen auch verformt werden und auf diese Weise komplizierte Geometrien realisiert werden. Auch ist es möglich, zwei oder mehr Bauteile durch das erfindungsgemäße Verfahren gleichzeitig oder nacheinander miteinander zu verbinden, wobei auch hier unterschiedlichste Anordnungen hergestellt werden können, wie etwa spiralige Anordnungen, aber auch flache, gewinkelte, gebogene, etc.

Die Metalllegierungen sind erfindungsgemäß nicht besonders beschränkt, insofern sie einen thixotropen Zustand aufweisen. Im Gegensatz zu vielen anderen bekannten Verfahren, wie etwa einem (Draht-)Schmelzen unter Verwendung von Laser-, Elektronen-, Plasma- und/oder Lichtbogen-Wärmequellen stehen dem vorliegenden Verfahren eine große Vielzahl an Legierungen zur Verfügung, da erfindungsgemäß nur im teil-flüssigen (thixotropen; teigigen) Zustand gearbeitet wird. Hierdurch können auch Verzüge der Bauteile vermieden werden. Auch können eine Vielzahl von Metalllegierungen verwendet werden, welche beispielsweise üblicherweise schweißtechnisch aufgrund von Heißriss- und/oder Porenbildung nicht oder nur schwer nutzbar sind. Gemäß bestimmten Ausführungsformen liegen die Legierungen nicht als Eutektikum vor. Gemäß bestimmten Ausführungsformen umfassen die Metalllegierungen ein oder mehrere Metalle, die ausgewählt sind aus der Gruppe, bestehend aus Al, V Cu, Mg, Ti, Fe, Cr, Co und Ni, beispielsweise V, Ti, Fe, Cr, Co und Ni. Durch das erfindungsgemäße Verfahren können auch beispielsweise Edelstähle, beispielsweise Chromstähle, wie auch Titanlegierungen und/oder Kupferlegierungen neben Aluminium- und/oder Magnesiumlegierungen verarbeitet werden und entsprechende Bauteile verbunden werden.

Erfindungsgemäß wird zumindest das erste Bauteil auf eine Temperatur erwärmt, bei welcher zumindest eine Metalllegierung des ersten Bauteils einen thixotropen Zustand aufweist. Es können auch - so vorhanden - mehrere Legierungen des ersten Bauteils bei einer solchen Temperatur einen thixotropen Zustand aufweisen.

Gemäß bestimmten Ausführungsformen kann auch das zweite metallische Bauteil oder weitere zu verbindende metallische Bauteile erwärmt werden. Die Erwärmung kann auf eine Temperatur erfolgen, die der Temperatur des ersten metallischen Bauteils nach dem Erwärmen bis zum thixotropen Zustand entspricht oder von dieser verschieden ist. Durch das Erwärmen können thermomechanische Spannungen, die sich durch Temperaturdifferenzen zwischen den metallischen Bauteilen ergeben können, vermindert oder verhindert werden. Das zweite metallische Bauteil und/oder weitere zu verbindende metallische Bauteile können hier gemäß bestimmten Ausführungsformen auf eine Temperatur erwärmt werden, bei der es bzw. sie - so es eine Metalllegierung umfasst bzw. sie eine Metalllegierung umfassen - einen thixotropen Zustand aufweist bzw. aufweisen, können aber auch auf eine Temperatur ohne einen solchen thixotropen Zustand erwärmt werden, Beispielsweise können das erste und zweite metallische Bauteil auf dieselbe Temperatur erwärmt werden, wobei das erste metallische Bauteil dann einen thixotropen Zustand aufweisen kann, das zweite aber nicht, beispielsweise in dem die beiden metallischen Bauteile unterschiedliche Legierungen aufweisen oder nur das erste metallische Bauteil eine Legierung umfasst.

Das Erwärmen der Bauteile ist erfindungsgemäß nicht besonders beschränkt, insofern die Erwärmung auf eine Temperatur erfolgt, bei der die Metalllegierungen in einem thixotropen Zustand vorliegen. Es ist erfindungsgemäß auch nicht ausgeschlossen, dass nur bestimmte Bereiche der Bauteile auf eine Temperatur erwärmt werden, bei der eine dort befindliche Metalllegierung in eine thixotropen Zustand übergeht. Wie oben erwähnt ist es nicht ausgeschlossen, dass die beiden metallischen Bauteile unterschiedlich erwärmt werden, beispielsweise indem ein Substrat als zweites metallisches Bauteil auf eine andere Temperatur erwärmt wird als das erste Bauteil im thixotropen Zustand, beispielsweise ein Draht, der auf dem Substrat abgelegt wird.

Es ist erfindungsgemäß auch nicht ausgeschlossen, dass die Erwärmung eines Bauteils oder mehrerer Bauteile bereits im Vakuum erfolgt oder fortgesetzt wird, jedoch ist dies weniger bevorzugt. Beispielsweise kann das zweite metallische Bauteil, z.B. ein Substrat, im Vakuum erwärmt werden, und das erste Bauteil erwärmt und dann in das Vakuum gefördert werden, oder auch andersrum. Somit können also der Schritt des Erwärmens des zumindest ersten metallischen Bauteils auf eine Temperatur, bei welcher zumindest eine Metalllegierung des ersten Bauteils einen thixotropen Zustand aufweist und der Schritt des Einbringens der metallischen Bauteile in ein Vakuum des erfindungsgemäßen Verfahrens auch in umgekehrter Reihenfolge durchgeführt werden.

Gemäß bestimmten Ausführungsformen erfolgt das Erwärmen durch induktive oder konduktive Erwärmung. Hierdurch kann eine gezielte, bevorzugt gut steuerbare Erwärmung durchgeführt werden, so dass ein bestimmter Zustand im thixotropen Bereich erzielt werden kann. Bevorzugt erfolgt die Temperatur derart, dass eine Beschädigung des ersten metallischen Bauteils, beispielsweise einer Rissbildung bei Drähten, im Wesentlichen verhindert wird, indem nicht zu schnell erwärmt wird. Die induktive oder konduktive Erwärmung ist hierbei nicht besonders beschränkt und kann auch an die Form des zu erwärmenden Bauteils angepasst sein. Es ist sowohl möglich, dass die Bauteile in separaten Erwärmungseinrichtungen erwärmt werden, wie auch, dass die Bauteile in nur einer gemeinsamen Vorrichtung, entweder gleichzeitig oder nacheinander, erwärmt werden. Beispielsweise kann das Erwärmen der metallischen Bauteile mittels einer oder mehreren Düsen erfolgen, welche beispielsweise induktiv geheizt werden. Das Material einer Erwärmungseinrichtung ist hierbei nicht besonders beschränkt, ist bevorzugt jedoch ein Material, dass sich nicht mit dem metallischen Bauteil verbindet, beispielsweise eine Keramik. Gemäß bestimmten Ausführungsformen kann also beispielsweise eine Erwärmung mit einer oder mehreren keramischen Düsen mit Induktionsspule erfolgen. Die Keramik ist hierbei nicht besonders beschränkt und kann an das zu erwärmende metallische Bauteil angepasst sein.

Gemäß bestimmten Ausführungsformen erfolgt die Erwärmung innerhalb von weniger als 1 Minute, bevorzugt 15 s oder weniger, weiter bevorzugt 10 s oder weniger, insbesondere so dass ein permanenter Materialfluss bzw. eine kontinuierliche Zufuhr des zumindest ersten metallischen Bauteils erfolgen kann. Hierdurch kann dann ein fortlaufender Bauteilaufbau auf dem zweiten Bauteil und ggf. weiteren metallischen Bauteilen erfolgen.

Weiterhin ist das Einbringen der metallischen Bauteile in ein Vakuum nicht besonders beschränkt und kann beispielsweise mittels einer geeigneten Fördereinrichtung erfolgen. Diese ist nicht besonders beschränkt, insofern sie die metallischen Bauteile durch die Erwärmungseinrichtung in das Vakuum bringt. Auch können mehrere Fördereinrichtungen vorgesehen sein.

Durch das Einbringen in das Vakuum ändern sich die Grenzflächenbedingungen der Metalllegierung im thixotropen Zustand positiv und es findet eine Art Aktivierung der Oberfläche statt. Zudem kann durch das Anlegen des Vakuums eine auf der Metalllegierung bestehende Schicht, wie eine Oxidschicht, aufgebrochen oder aufgelöst werden, so dass eine verbesserte Verbindung mit einer entsprechend aktivierten anderen Oberfläche ermöglicht wird. Überraschenderweise lassen sich hierbei auch temperaturstabilere Oxidschichten wie bei Edelstählen bzw. nickelbasierten und/oder chrombasierten Legierungen aufbrechen. Auch hervorzuheben sind Titanlegierungen, bei denen eine Titandioxidschicht durch die Aktivierung im Vakuum aufgelöst werden kann. Beispielsweise kann eine Chromoxidschicht bei einem Druck von 10⁻⁴ hPa und einer Temperatur von ungefähr 1000°C zerfallen, oder eine Aluminiumoxidschicht durch Ausdehnung beim Erwärmen zerreißen.

Gemäß bestimmten Ausführungsformen weist das Vakuum eine Druck von weniger als 300 hPa, bevorzugt von weniger als 250 hPa, weiter bevorzugt von 10 hPa oder weniger, besonders bevorzugt 1 hPa oder weniger, insbesondere bevorzugt 0,1 hPa oder weniger, insbesondere einen Druck in einem Bereich von 0,1 hPa bis 10⁻⁶ hPa auf. Durch ein geeignetes Vakuum kann zum einen das Aufbrechen bzw. Auflösen einer Oberflächenschicht der metallischen Bauteile erfolgen, zum anderen kann auch eine erneute Erzeugung einer neuen Oberflächenschicht verhindert werden. Insbesondere zur Vermeidung von neuen Oxidschichten kann die Vakuumerzeugung beispielsweise auch in einer Schutzgasatmosphäre, beispielsweise Stickstoff und/oder ein oder mehrere Edelgase, erfolgen.

Darüber hinaus ist das Inkontaktbringen der metallischen Bauteile nicht besonders beschränkt und kann beispielsweise nur punktuell wie aber auch flächig stattfinden. Beispielsweise können auch ganze Bauteile miteinander auf einer Fläche, beispielsweise bei flächigen Bauteilen wie Flachdrähten, oder Linie, wie bei Drähten, miteinander in Kontakt gebracht werden. Das Inkontaktbringen sollte jedoch zumindest zu einem Zeitpunkt erfolgen, in dem sich mindestens eine Metalllegierung in einem Bereich eines Bauteils noch in einem thixotropen Zustand befindet. Bevorzugt befinden sich alle zu verbindenden Metalllegierungsbereiche bei dem Inkontaktbringen noch im thixotropen Zustand. Das Inkontaktbringen erfolgt nach dem Erwärmen und dem Einbringen ins Vakuum. Gemäß bestimmten Ausführungsformen erfolgt das Inkontaktbringen durch eine fortlaufende, ggf. kontinuierliche Zufuhr des zumindest ersten metallischen Bauteils.

Die metallischen Bauteile sind erfindungsgemäß nicht besonders beschränkt, sofern zumindest ein erstes derart erwärmt werden kann, dass eine vorhandene Metalllegierung in einen thixotropen Zustand gebracht wird, und insofern sie in ein Vakuum gebracht werden können. Die Bauteile können Drähte, Filamente, Folien, Röhren, Platten oder andere Substrate, Stücke oder komplexere Bauteile sein, insofern sie geeignet erwärmt werden können. Gemäß bestimmten Ausführungsformen kann beispielsweise das zweite Bauteil ein Substrat sein, auf dem beispielsweise ein Draht als erstes Bauteil nach Bringen in den thixotropen Zustand abgelegt wird und aus diese Weise, ähnlich dem Fused-Deposition Modelling bei Kunststoff, eine Art 3D-Drucken mit metallischen Bauteilen durchgeführt wird. Die so erzeugte Anordnung mit dem Draht auf dem Substrat kann dann im Anschluss wiederum als Substrat dienen, wobei dann erneut ein Draht als erstes metallisches Bauteil auf dem nunmehr aufgebrachten Draht oder an anderer Stelle oder beidem mit dem erfindungsgemäßen Verfahren aufgebracht werden kann, um so beispielsweise 3D-Strukturen zu erzeugen. Es können auch mehrere erste metallische Bauteile gleichzeitig aufgebracht werden bei hinreichend großem Substrat, etc. als zweitem Bauteil. Auch können andere Bauteile als Drähte beispielsweise als erste oder auch dritte metallische Bauteile, etc. aufgebracht werden.

Auch ist nicht ausgeschlossen, dass ein erstes metallisches Bauteil auf zwei oder mehr zweite metallische Bauteile, die gleich oder verschieden sein können, aufgebracht wird, um diese so beispielsweise zu verbinden.

Gemäß bestimmten Ausführungsformen sind die ersten metallischen Bauteile Drähte, beispielsweise Rund- oder Flachdrähte, und/oder Filamente. Diese haben beispielsweise bevorzugt - im Fall von annähernd runden bzw. runden Drähten, einen Durchmesser von weniger als 1 cm, bevorzugt bis 5 mm, weiter bevorzugt bis 4 mm, noch weiter bevorzugt von 2 mm oder weniger, besonders bevorzugt 1 mm oder weniger. Annähernd runde bzw. runde Drähte haben bevorzugt einen Durchmesser von wenigstens 0,01 mm, weiter bevorzugt von wenigstens 0,05 mm, insbesondere bevorzugt 0,1 mm oder mehr. Im Falle von Flachdrähten haben sie beispielsweise eine Dicke und/oder Breite von weniger als 1 cm, bevorzugt bis 5 mm, weiter bevorzugt bis 4 mm, noch weiter bevorzugt von 2 mm oder weniger, besonders bevorzugt 1 mm oder weniger. Zudem haben sie im Falle von Flachdrähten eine Dicke von mindestens 0,02 mm, bevorzugt mindestens 0,05 mm, weiter bevorzugt mindestens 0,1 mm, insbesondere bevorzugt 0,2 mm, und/oder eine Breite von mindestens 0,05 mm, bevorzugt mindestens 0,1 mm, weiter bevorzugt mindestens 0,2 mm und insbesondere bevorzugt mindestens 0,5 mm. Neben Flachdrähten und (annähernd) runden Drähten sind aber auch andere Drahtgeometrien möglich, beispielsweise quadratisch, dreieckig, sechseckig, etc., welche bevorzugt jedoch die gleiche Querschnittsfläche wie die Flachdrähte bzw. (annähernd) runden Drähte aufweisen.

Gemäß bestimmten Ausführungsformen ist das zweite metallische Bauteil ein Substrat, beispielsweise eine Platte, für eine Art 3D-Druck.

Gemäß bestimmten Ausführungsformen wird vor dem Erwärmen der metallischen Bauteile eine Reinigung der metallischen Bauteile durchgeführt. Die Reinigung ist nicht besonders beschränkt und kann eine chemische und/oder physikalische Reinigung umfassen, beispielsweise zur Entfernung von organischen oder anorganischen Resten auf den Bauteilen, welche ansonsten bei der Erwärmung und im Vakuum zuerst entfernt werden müssten oder zu einer Verunreinigung der Verbindung führen können. Die Reinigung kann hierbei abhängig vom jeweiligen Bauteil und/oder einer zu erwartenden bzw. vorhandenen Verunreinigung erfolgen.

Gemäß bestimmten Ausführungsformen erfolgt nach dem Inkontaktbringen der metallischen Bauteile eine Nachbehandlung. Eine solche Nachbehandlung kann beispielsweise eine Wärmenachbehandlung sein, beispielsweise ein heißisostatisches Pressen (z.B. Erwärmen bei 500000 - 2000000 hPa (500 - 2000 bar)), um eine bessere Materialanbindung und/oder-verfestigung zu erreichen, indem Material des ersten und/oder zweiten metallischen Bauteils oder weiterer Bauteile in Fehlstellen eindringen kann, und so einen verbesserten Kontakt zu erzeugen. Eine solche Nachbehandlung erfolgt bevorzugt in inerter Gasatmosphäre, z.B. Edelgasatmosphäre, z.B. Argon. Eine solche Nachbehandlung kann unter Berücksichtigung der metallurgischen und/oder thermodynamischen Eingenschaften der verwendeten Bauteile erfolgen.

In einem weiteren Aspekt betrifft die vorliegende Erfindung eine Anordnung, welche durch das erfindungsgemäße Verfahren hergestellt wurde. Die entsprechend hergestellte Anordnung zeichnet sich durch eine verbesserte Verbindung bei den Stellen der Bauteile aus, die verbunden wurden, da beim Verfahren Schichten, welche die Verbindung negativ beeinflussen können, z.B. Oxidschichten, zumindest teilweise entfernt werden und eine Aktivierung der Metalllegierungen stattfindet.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

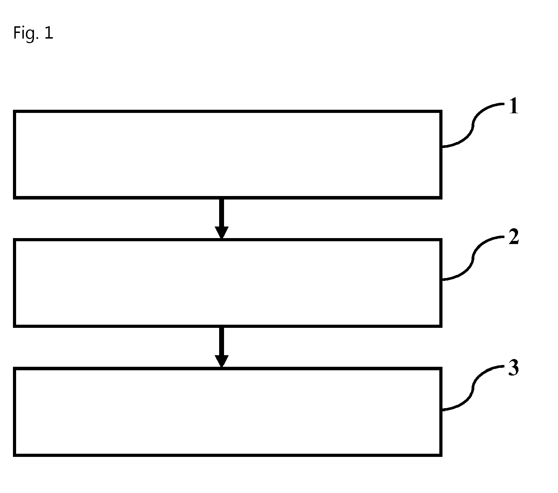

Die Erfindung wird nachstehend anhand von Ausführungsbeispielen in der Zeichnung näher erläutert. Es zeigen in teilweise schematisierter Darstellung
- Fig.1: schematisch einen möglichen Ablauf eines erfindungsgemäßen Verfahrens zum Verbinden von metallischen Bauteilen.

In allen Figuren sind gleiche bzw. funktionsgleiche Elemente und Vorrichtungen - sofern nichts anderes angegeben ist - mit denselben Bezugszeichen versehen worden.

Die Figur 1 zeigt schematisch den Ablauf eines erfindungsgemäßen Verfahrens. In Schritt 1 findet ein Erwärmen der metallischen Bauteile, beispielsweise zwei Runddrähten einer Aluminium-Magnesium-Legierung, auf eine Temperatur statt, bei der diese sich in einem thixotropen Zustand befinden. Die Erwärmung findet hierbei durch zwei induktiv geheizte keramische Düsen statt, welche die beiden Runddrähte separat erwärmen. Durch die Düsen werden die Drähte in ein Vakuum eingebracht, wobei sie derart eingebracht werden, dass sie im Vakuum in Kontakt kommen. Nach dem Inkontaktbringen entsteht eine Anordnung, in der die beiden Drähte miteinander stoffschlüssig verbunden sind, wobei eine Oxidschicht an der Verbindung im Wesentlichen nicht vorhanden ist. Die Anordnung kann dann beispielsweise weiter mit anderen Bauteilen verbunden werden.

Durch das erfindungsgemäße Verfahren wird eine Möglichkeit geschaffen, ähnlich dem Additive Layer Manufacturing oder anderen 3D-Drucktechniken komplizierte Strukturen auf einfache Weise herzustellen, welche auf Metalllegierungen bzw. metallischen Strukturen basieren. Somit kann das Anwendungsgebiet für das bisher nur funktionierende Polymer-Draht-Drucken (fused deposition modelling) auf metallische Halbzeuge erweitert werden. Es stellt eine kostengünstige 3D-Druckmethode zur bedarfsweisen Herstellung von Metall-Halbzeugen dar.

### Bezugszeichen

- 1: Schritt des Erwärmens
- 2: Schritt des Einbringens in Vakuum
- 3: Schritt des Verbindens

## Patentansprüche

1. Verfahren zum Verbinden von zumindest einem ersten und einem zweiten metallischen Bauteil, wobei das erste metallische Bauteil mindestens eine Metalllegierung umfasst, umfassend die folgenden Verfahrensschritte:
Erwärmen des zumindest ersten metallischen Bauteils auf eine Temperatur, bei welcher zumindest eine Metalllegierung des ersten Bauteils einen thixotropen Zustand aufweist;
Einbringen der metallischen Bauteile in ein Vakuum; und
Inkontaktbringen der metallischen Bauteile.

2. Verfahren nach Anspruch 1, wobei die metallischen Bauteile Drähte und/oder Filamente sind.

3. Verfahren nach Anspruch 1 oder 2, wobei das Erwärmen durch induktive oder konduktive Erwärmung erfolgt.

4. Verfahren nach wenigstens einem der vorhergehenden Ansprüche, wobei das Erwärmen der metallischen Bauteile mittels einer oder mehreren Düsen erfolgt.

5. Verfahren nach wenigstens einem der vorhergehenden Ansprüche, wobei die Erwärmung innerhalb von weniger als 1 Minute erfolgt.

6. Verfahren nach wenigstens einem der vorhergehenden Ansprüche, wobei das Vakuum einen Druck von weniger als 300 hPa aufweist.

7. Verfahren nach wenigstens einem der vorhergehenden Ansprüche, wobei die Metalllegierungen ein oder mehrere Metalle umfassen, die ausgewählt sind aus der Gruppe bestehend aus Al, V Cu, Mg, Ti, Fe, Cr, Co und Ni.

8. Verfahren nach wenigstens einem der vorhergehenden Ansprüche, wobei vor dem Erwärmen des zumindest ersten metallischen Bauteils eine Reinigung des ersten metallischen Bauteils durchgeführt wird.

9. Verfahren nach wenigstens einem der vorhergehenden Ansprüche, wobei auch das zweite metallische Bauteil erwärmt wird.

10. Verfahren nach wenigstens einem der vorhergehenden Ansprüche, wobei nach dem Inkontaktbringen der metallischen Bauteile eine Nachbehandlung erfolgt.

11. Verfahren nach wenigstens einem der vorhergehenden Ansprüche, wobei das zweite Bauteil mindestens eine Metalllegierung umfasst.

12. Anordnung, hergestellt durch ein Verfahren nach wenigstens einem der vorhergehenden Ansprüche.
